# EUROPEAN PATENT SPECIFICATION

(11) **EP 3 037 783 B1**
(45) Date of publication and mention of the grant of the patent: **25.09.2019**
(21) Application number: 14199920.1
(22) Date of filing: 23.12.2014
(51) Int. Cl.: G01C 21/36, G06F 3/01, G06F 3/048

(54) **Information processing apparatus, particularly navigation system, and method of processing information**
Informationsverarbeitungsvorrichtung, insbesondere Navigationssystem, Verfahren und Vorrichtung zur Informationsverarbeitung
Appareil de traitement d'informations, en particulier système de navigation et procédé de traitement d'informations

(43) Date of publication of application: 29.06.2016
(73) Proprietor: Alpine Electronics, Inc., Tokyo (JP)
(72) Inventor: Barota, Ovidiu Petru, 70567 Stuttgart (DE)
(74) Representative: Schmitt-Nilson Schraud Waibel Wohlfrom Patentanwälte Partnerschaft mbB

(56) References cited:
- EP-A1- 2 251 644
- EP-A1- 2 518 442
- EP-A2- 2 000 894
- WO-A2-2007/148128
- US-A1- 2005 107 949
- US-A1- 2013 339 891

## Description

The invention relates to an information processing apparatus comprising a processing device configured to process data received from a data storage device and to determine one of multiple sorting criteria, and further configured to provide a plurality of information derived from the processed data to a display device for displaying the plurality of information on the display device according to the one of the sorting criteria, and to a method of processing information in such information processing apparatus. Particularly, the information processing apparatus may be a navigation system.

A commonly known information processing apparatus for processing map data is used, for example, in a navigation system, such as a vehicle navigation system, having a display screen for displaying a map image and/or a plurality of information processed or derived from the map data, such as several POIs (points of interest), e.g. related to the current vehicle position. A commonly known navigation system detects the position of a vehicle generally by using a navigation sensor in the vehicle, and processes map data corresponding to an area surrounding the detected position. For example, the map data can be read from a map data storage device such as a DVD or harddisk. Typically, a map information processing apparatus installed in a navigation system collects required map data and processes map data for being displayed on a display screen, e.g. in the form of a map display and/or a list, such as a list of POIs. For example, a plurality of POIs may be displayed according to a particular sorting criterion determined by the processing apparatus, such as restaurants closest to the current vehicle position appearing at the top of the list.

Processing devices exist which allow the end user to change any sorting preferences or computational options after a list of desired information (e.g. a solution list of a search) is presented. These are mostly realized by HMI (human machine interface) elements like option tag, tick box, or a drop-down option list.

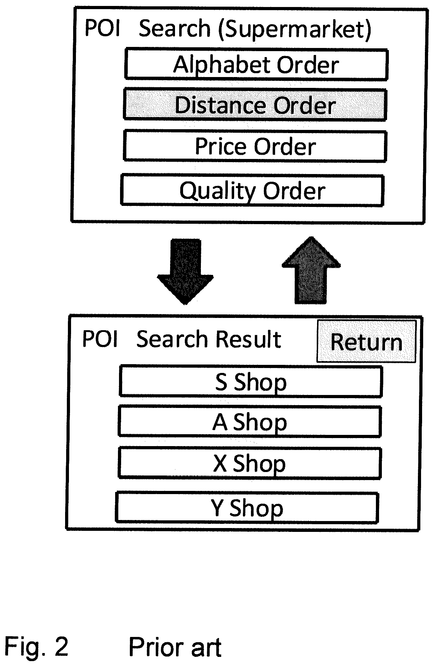

Fig. 2 shows an exemplary selection of a sorting criterion for POIs by a user (in the top depiction) and an exemplary list of POIs displayed on a display screen of a navigation system according to the selected sorting criterion (in the lower depiction), as known in the prior art. For example, a list of POIs can be displayed according to one of several sorting criteria, wherein the user in the present example may select to display a list of supermarkets according to alphabetical order (first sorting criterion), distance order (second sorting criterion), price order (third sorting criterion), or quality order (fourth sorting criterion).

When the navigation system displays the POI (here: supermarket) names in the list on the display screen, the user selects the sorting condition or criterion at first. In the present example, the user selects "distance order" as a sorting criterion, as shown in the top depiction which shows a condition selection image. After that, the navigation system sorts the POI names according to the selected sorting condition or criterion, and displays the POIs sorted accordingly in the form of a sorted list, as shown in the lower depiction which shows a search result image sorted accordingly. If the user wants to change the sorting condition or criterion, e.g. to "price order", the user needs to push the "Return" button in the search result image and display the condition selection image again. In this image, the user can then select the sorting condition or criterion "price order", wherein afterwards a new search result image is displayed.

If the navigation system is used during driving a vehicle, this may cause driver's distraction since the driver is forced to look onto the display screen for switching between condition selection image and search result image. Furthermore, the process of re-sorting or re-computation of a possible search result list displayed to the user on the display screen may consume quite a long time.

US 2008/0167812 A1 discloses a method and device for navigation. In at least one embodiment, the method includes determining a designated fuel type; and displaying selectable fuel pricing information on a display of a navigation device, based upon the designated fuel type and in consideration of a location of the navigation device. In at least one embodiment, the navigation device includes a processor to determine a designated fuel type; and an integrated input and display device to display selectable fuel pricing information based upon the designated fuel type and in consideration of a location of the navigation device.

WO 2007/132578 A1 discloses a facility search device which has a facility database for storing facility information, a facility search section for searching for a facility from the facility database, a network search section for performing a search by using a search site prepared on a network by using information on the facility searched by the facility search section as a search key, a popularity rating evaluation section for evaluating, based on the number of hits in the search by the network search section, the popularity rating of the facility searched by the facility search section, and an output section for outputting, in the order of popularity rating beginning with the highest, the facility information evaluated by the popularity rating evaluation section.

US 2007/0290039 A1 discloses a method for recommending service stations for vehicles based on a user's route or location. The method comprises mapping a user's current location, collecting fuel prices from stations that are within a predetermined distance from the user's location and displaying the location of at least one service station, based at least in part on fuel prices.

JP 2007 263626 A provides a navigation system capable of selecting or rearranging genres in genre search not only according to predetermined order of genres but also according to users' preference and users' convenience of use. An arrangement order alteration reception part displays alteration reception buttons indicating rearrangement purposes such as the order of the Japanese syllabary and orders of frequency on a screen displaying a menu list and receives the rearrangement of menu items. A rearrangement part accesses data recorded in a storage part and rearranges the menu items on the basis of the type of alteration reception button such as the order of the Japanese syllabary.

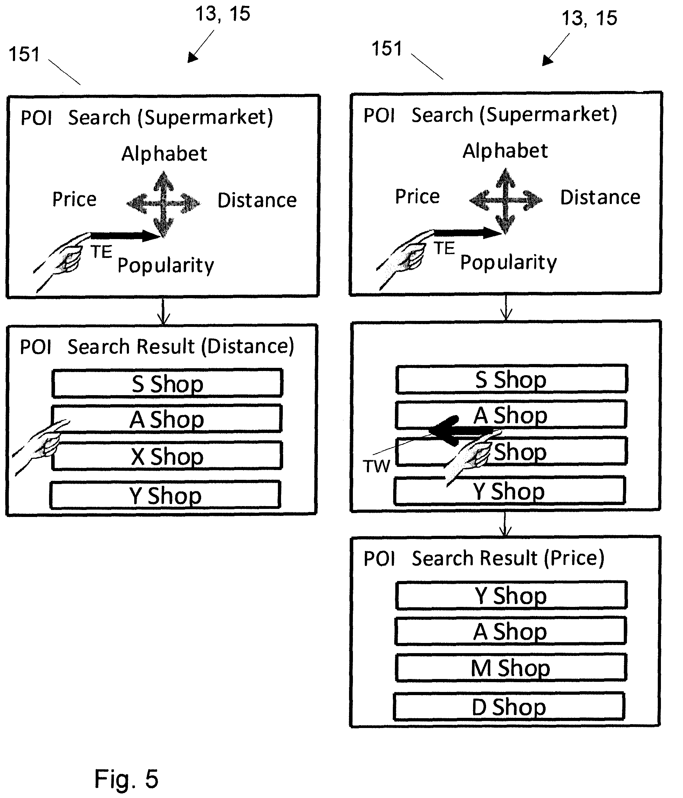

EP 2 518 442 A1 discloses a navigation device which includes a data storage means for storing map data including information relating to a map, and information relating to positions and usage fees of facilities; a budget range determination means for determining a range of budget desired by a user; a facility search means for searching the facilities under a predetermined search condition; and a display means for displaying a facility list that lists up a facility, for which the usage fee complies with the range of budget, out of the searched facilities searched by the facility search means is indicated with emphasis. Figure 5 presents a diagram illustrating a search result display screen that shows the result of facility search. Particularly there is displayed a list of the searched facilities together with respective distances between each of the facilities and the current location. Further, on the test result display screen, there are displayed a distance button, an alphabetical order button and a budget button. Depending on which of these buttons the user presses, the facilities are displayed on higher levels in the list depending on a distance, the alphabetical order, or usage fees.

US 2005/107949 A1 discloses a display method and apparatus for a navigation system which is capable of easily and quickly specifying a destination in the navigation system when using a "Point of Interest (POI)" method by preventing unwanted POI names or types from appearing on the navigation system. The method includes the steps of displaying a POI name list based on an instruction specified by a user, selecting an unwanted POI name in the POI name list, and removing all POIs having the unwanted POI name or having the unwanted POI type from the POI name list.

EP 2 251 644 A1 discloses a rotary input device including a rotary operation device; a detection section; a display control section; a rotation driving section to apply a rotary force to the rotary operation device; a first force sense presenting section to present a first force sense by a combination of at least any two of applying a rotary force in a normal rotation direction, applying a rotary force in a reverse rotation direction, and stopping applying when the detected rotation angle reaches a predetermined switching angle corresponding to the displayed predetermined display information; a second force sense presenting section to present a second force sense different from the first force sense by applying the rotary force in the normal rotation direction when the rotation angle detected by the detection section is within a first range, and in the reverse rotation direction when the angle is within a second range.

It is an object of the invention to provide an information processing device, particularly a navigation system, which is capable of reducing driver's distraction when used in a vehicle, and which is capable of reducing process time for re-computation and displaying of a possible list of information provided to the user.

The invention relates to an information processing apparatus according to claim 1 and to a method of processing information in an information processing apparatus according to claim 13.

The invention provides the following advantages: The end user can more quickly select the desired sorting criterion, since it is not necessary to switch between different display images, one of them displaying a list of sorting criteria, and the other one displaying the resulting information list sorted accordingly. The user does not need to push a "Return" button or the like in a result information list and look onto the criterion selection image again. The end user does not need to pay attention to any distracting HMI options for selecting any sorting criteria. This results in less driver distraction and faster processing time.

Moreover, the end user can quickly compare any information lists sorted differently one after the other, and make a selection decision based on own experience. Further, the end user can exploit the high computation power of the information processing device by requesting adjustment of the options in a much quicker way. The end user profits of information list optimization using the same method in any context.

According to an embodiment, the plurality of information is a plurality of solution information of a data search performed by the processing device when processing the data received from the data storage device.

According to an embodiment, the processing device is configured to provide the plurality of information in the form of a list of information derived from the processed data. When the processing device changes the one of the sorting criteria to the another one of the sorting criteria, the list of information displayed on the display device is changed in its sorting sequence.

According to a further embodiment, the processing device is configured to provide the plurality of information in the form of a highlighted graphical display of information derived from the processed data, with multiple pieces of information highlighted differently from another in a highlighting sequence. When the processing device changes the one of the sorting criteria to the another one of the sorting criteria, the highlighting sequence of the multiple pieces of information displayed on the display device is changed.

Preferably, the processed data are processed map data, and the plurality of information is derived from the processed map data and comprises multiple points of interest (so-called POIs) and/or multiple pieces of route information for guiding a user. For example, the multiple POIs and/or pieces of route information may be highlighted differently in a highlighting sequence (e.g. with different color) according to the selected sorting criterion.

Advantageously, the information processing apparatus according to the invention is a navigation system, particularly for use in a vehicle. For example, the navigation system is installed in a vehicle. In such navigation system, the processing device is configured to process map data received from a map data storage device, and the plurality of information is derived from the processed map data. For example, processing map data may include searching for particular data items in the map data (e.g. of a particular category related to the vehicle position) and providing the plurality of information as a result of such searching process.

For example, the sorting criteria, according to which the plurality of information can be displayed, may include at least several ones of a quality, cost, time, price, alphabet, distance and popularity criterion.

According to an embodiment, the input device comprises a handle portion which is movable by a user in at least three directions, which are corresponding to the first directional movement, second directional movement and third directional movement.

Preferably, the input device comprises a rotary portion which is rotatable by a user in at least one rotary direction to provide at least a first input functionality and which is movable by a user corresponding to the first directional movement, second directional movement and third directional movement, which are each transverse to the rotation axis of the rotary portion, to provide at least a second input functionality.

For example, the input device is configured to detect a rotation of the rotary portion for selecting among the plurality of information displayed on the display device.

Further, the input device may be configured to detect a push movement of the rotary portion for entering a selected information selected among the plurality of information displayed on the display device for processing by the processing device.

According to a further embodiment, the input device comprises a touch screen device or touch pad device which is configured to detect a touch input movement by a user corresponding to the first directional movement, second directional movement and third directional movement. Particularly, the touch screen device or touch pad device is configured to detect a flick operation movement as a touch input movement.

According to an embodiment, the touch screen device is comprised at least in part in the display device and is configured to display the plurality of information and to detect the touch input movement by a user corresponding to the first directional movement, second directional movement or third directional movement on a portion of the touch screen device where the plurality of information is displayed to the user.

The first directional movement, second directional movement and third directional movement are each translational, in any one of four perpendicular directions, such as north, east, south or west directions.

The first directional movement is at a first angle to the second directional movement, and the second directional movement is at a second angle to the third directional movement. The first and the second angle are right angles.

All embodiments as described herein with respect to the apparatus may equally be applied in connection with the method as described herein.

Embodiments of the invention are described in greater detail below with reference to the Figures, in which:
- Fig. 1: shows a schematic block diagram illustrating a possible structure of an embodiment of a vehicle navigation system,
- Fig. 2: shows an exemplary selection image for selecting a sorting criterion for POIs by a user (in the top depiction) and an exemplary list of POIs displayed on a display screen according to the selected sorting criterion (in the lower depiction), as known in the prior art,
- Fig. 3: shows an embodiment of a rotary input device, such as a rotation knob, for use according to an embodiment of the invention,
- Fig. 4: shows the embodiment of the rotary input device according to Fig. 3 used according to an embodiment of the invention for selecting a sorting criterion and generating an exemplary list of POIs displayed on a display device according to the selected sorting criterion and for selecting one of the POIs in the list,
- Fig. 5: shows another embodiment of a touch screen device used according to an embodiment of the invention for selecting a sorting criterion and displaying an exemplary list of POIs according to the selected sorting criterion and for changing the sorting criterion to another one of the sorting criteria,
- Fig. 6: shows three different depictions of route information displayed on a display device highlighted differently from another according to a respective different sorting criterion.

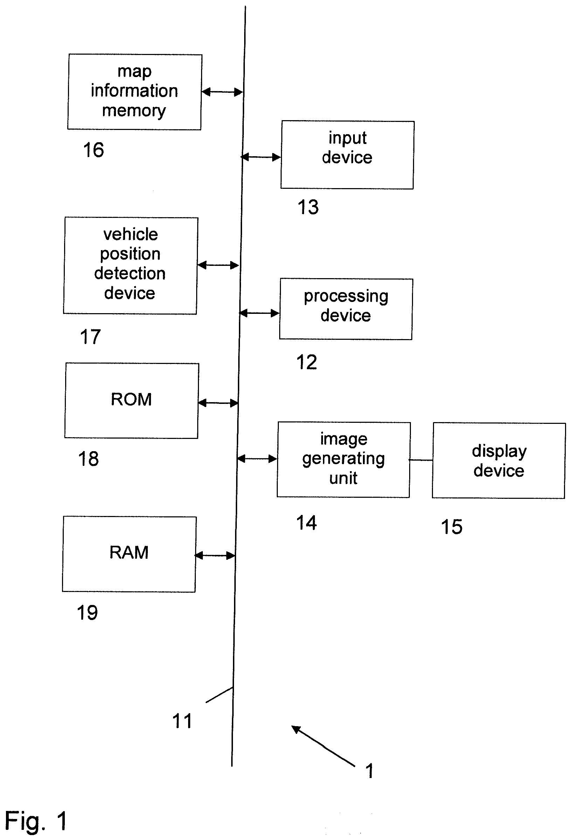

Fig. 1 shows a schematic block diagram illustrating a possible structure of an embodiment of an information processing apparatus 1 according to the invention. In the present embodiment, the information processing apparatus 1 is a navigation system. It includes a processing device 12, such as a microprocessor which may be used as a CPU (central processing unit), for controlling the overall operation of the navigation system 1 and for processing any data, such as map data, received from components of the navigation system 1. A ROM 18 may be used for storing any processing algorithms, such as a guidance route search program or the like. A display device 15 may include a display screen, such as a touch screen, and may be coupled with an image generating unit 14 for displaying information on the display screen, such as a map image and/or a list of information. The image generating unit 14 interacts with the processing device 12 for generating images based on the data processed and provided by the processing device 12 for displaying on the display device 15.

The navigation system 1 may further comprise a data bus 11 which is under the control of the processing device 12 for connecting the components of the navigation system with each other. Via the data bus 11 the processing device 12 is further coupled with a map information memory 16 which is a data storage device for storing map data to be processed. For example, the map data include geographic information for guiding a user and a plurality of POIs, such as filling stations, restaurants, hotels, etc.

The processing device 12 may process the map data provided from the map information memory, e.g. for route searching and/or for generating a list of POIs related to the current vehicle position. To this end, the navigation system 1 further comprises a vehicle position detection device 17, such as a GPS sensor, for detecting the current vehicle position. Any generated search result, such as any searched route(s) to a destination and/or search result list of POIs, may be at least temporarily stored in a RAM 19 for access by the processing device 12 and/or any other component of the navigation system 1.

An input device 13 is capable of receiving users' instructions for operating the navigation system 1. It may comprise, for example, a touch input device, such as a touch pad device or touch screen device. That is, in a particular embodiment, if the display device 15 comprises at least in part a touch screen device, it may also serve at least in part as an input device 13. According to a further embodiment, the input device 13 may (additionally or alternatively) comprise a handle portion or a rotary input device, as described in an example in more detail below.

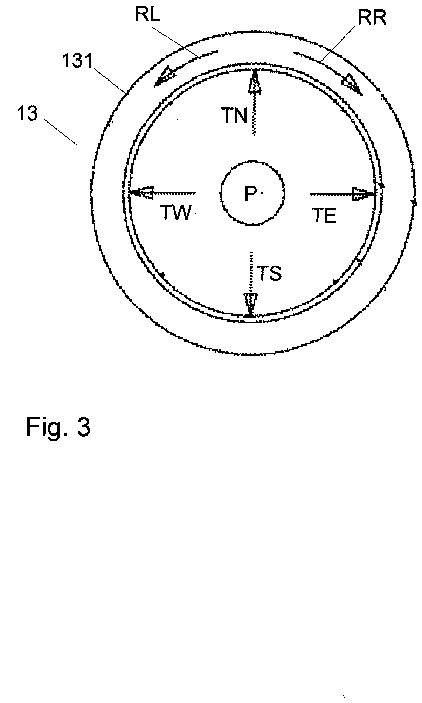

Fig. 3 shows an embodiment of an input device 13 implemented as a rotatable input device, such as a rotation knob, for use according to an embodiment of the invention. The rotatable input device has a rotary portion 131 which is rotatable in a first rotary direction RL (e.g., left rotary direction), and which is also rotatable in a second rotary direction RR (e.g., right rotary direction), which are both substantially horizontal. For example, the rotary portion 131 is a rotary knob which is rotatable in the rotary directions RL and RR. The rotary portion 131 is supported by appropriate guidance means (not shown) for the rotary movement. By rotating the rotary portion 131, a first input functionality may be provided, such as for selection among a plurality of information displayed on a display device.

A second input functionality may be provided by moving the rotary portion 131 in one of a first directional movement TE, a second directional movement TN, a third directional movement TW, and a fourth directional movement TS, which are each transverse (perpendicular) to the rotation axis of the rotary portion 131. That is, the rotary portion 131 may be pushed and/or tilted sideways. For example, the first directional movement TE is at a first angle to the second directional movement TN, and the second directional movement TN is at a second angle to the third directional movement TW, wherein the first and/or the second angle are right angles. Alternatively, the end positions of three of the movements TE-TS may be in the corners of a triangle. For resetting the rotary portion 131 to its basic central position as shown in Fig. 3, resilient members (not shown) in the form of appropriate springs may be used. For the purposes of the invention, it may be sufficient that the rotary portion 131 is movable in three of the directions TE, TN, TW, TS.

For example, the directional movements TE, TN, TW, TS are each translational. This shall also encompass movements which involve a tilting movement of the rotary portion 131 in the directions TE, TN, TW, TS.

A third input functionality may be provided by pushing the rotary portion 131 in a push direction P which is transverse to the rotary directions RR, RL and the directional movements TE, TN, TW, TS. For example, by pushing the rotary portion 131 in the push direction P perpendicular to the directional movements TE, TN, TW, TS, the user may select (enter) a particular function displayed on the display screen, thus providing a commonly known confirmation-functionality.

According to another embodiment, instead of a rotary input device as shown in Fig. 3 or in addition thereto, a handle portion (such as a joystick having three or more potential positions) may be used which is movable by a user corresponding to at least three of the directional movements TE, TN, TW, and/or TS. The movements are perpendicular to one another, or the end positions of the movements may be in the corners of a triangle. Other embodiments in this regard are also possible.

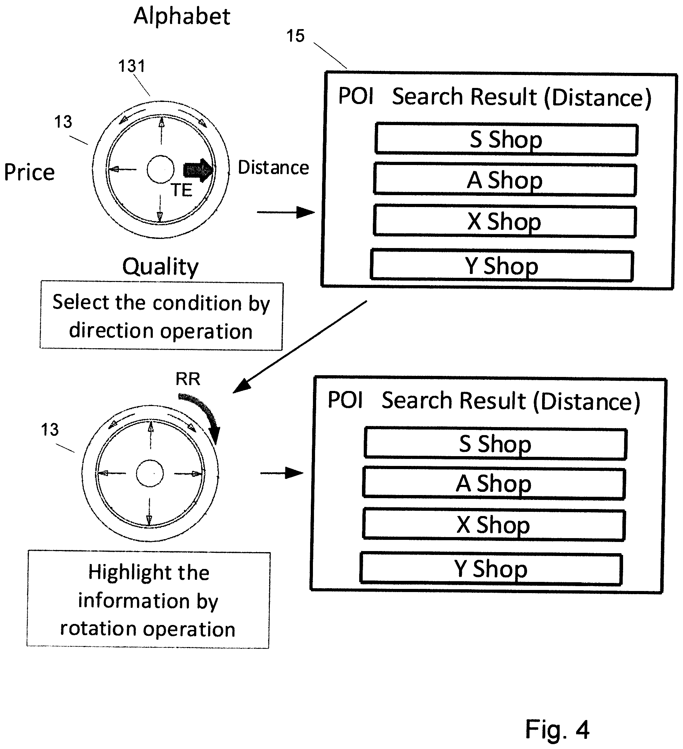

Fig. 4 shows an embodiment of the invention, in which a rotary input device, such as described in an example according to Fig. 3, is used for selecting a sorting criterion and generating an exemplary list of POIs displayed on a display device according to the selected sorting criterion and for selecting one of the POIs in the list.

It is assumed that a plurality of information, such as a list of POIs, is displayed on the display device 15. For example, the POIs are supermarket shops related to the current vehicle position. The processing device 12 processes map data received from the map data storage device 16 and determines one of multiple sorting criteria. A plurality of information, such as POIs searched by the processing device 12, are provided to the display device 15 for displaying the plurality of information (i.e. POIs) on the display device 15 according to the determined sorting criterion. For example, the sorting criterion is determined by the user by means of the input device 13 as follows.

As shown in the top row of Fig. 4, the input device 13 detects a user input movement and determines that it corresponds with the directional movement TE which is indicative of a particular sorting criterion, here a "Distance" criterion. That is, the list of POIs in the search result list displayed on display device 15 is sorted so that the supermarket shops are sorted by distance related to the current vehicle position, i.e. the shop having the closest distance to the current vehicle position is displayed on top of the list.

Thus, the navigation system 1 determines the sorting criterion or condition (here: alphabetical, price, or distance, etc.) according to the detected direction of operation (here: directional movement TE) of the input device 13 by the user. Since the directional movement TE is indicative of the sorting criterion "Distance", the processing device 12 determines the sorting criterion to be "Distance". The navigation system then sorts the plurality of information (here: POI names) displayed on the display device 15 based on the selected sorting criterion. In the present case, the closest POI (i.e. having the shortest distance to the current vehicle position) is displayed at the top of the list. The navigation system then highlights one of the plurality of information (one of the POI names) according to a rotation operation of the input device 13 by the user, e.g. who rotates the rotary portion 131 in the rotation direction RR highlighting "A Shop". In this way, the input device 13 detects a rotation of the rotary portion 131 for selecting among the plurality of information (POI names) displayed on the display device 15. The navigation system then selects/enters the selected information, e.g. shown by a highlighted POI name (A Shop), according to a push operation by the user in the push direction P. That is, the input device 13 detects a push movement of the rotary portion 131 for entering a selected information displayed on the display device 15 for processing by the processing device 12.

The sorting criterion or condition is determined depending on which of the directional movements TE, TN, TW and TS is determined to correspond with the detected user input movement of the input device 13. Each of the directional movements TE, TN, TW and TS is indicative of a different sorting criterion.

If, for example, the input device 13 is then operated by the user, e.g., in the directional movement TW, the processing device 12 then changes the sorting criterion or condition "Distance" to "Price" criterion or condition, which corresponds to the directional movement TW. The processing device 12 of the navigation system then changes the displaying of the plurality of information (POI names) on the display device 15 according to the sorting criterion "Price". That is, when the processing device 12 changes one of the sorting criteria to another one of the sorting criteria, the list of information displayed on the display device is changed in its sorting sequence. Since this can be done while the plurality of information (POI names) is displayed on the display device 15, as shown in Fig. 4, the user can more quickly select the desired sorting criterion, since it is not necessary to switch between different display images, one of them displaying a list of sorting criteria, and the other one displaying the resulting information list sorted accordingly. The user does not need to push a "Return" button or the like in a result information list and look onto the criterion selection image again.

Fig. 5 shows another embodiment of the invention which employs a touch screen device 151 used for selecting a sorting criterion and for displaying a result image, such as a list of POIs according to the selected sorting criterion, and for changing the sorting criterion to another sorting criterion. The touch screen device 151, which is configured to receive and detect a touch input movement, thus forming at least a part of an input device 13, may be a part of the display device 15 (for example, may form the display screen thereof). In such implementation, the input device 13 and display device 15 are then formed, at least in part, by a combined device, e.g. the touch screen device 151. Further, instead of a touch screen device or in addition thereto, a touch pad device may also be used. Such a touch pad device may also be used instead of a rotary input device (e.g. rotation knob) or handle portion (e.g. joystick) as described above.

Particularly, such touch screen device or touch pad device is configured to detect a touch input movement by a user corresponding to the first directional movements TE, TN, TW, TS. Such touch input movement may be performed by the user as a respective flick operation movement in the respective direction.

For example, as shown in Fig. 5 in the left column, the directional movements TE, TN, TW, TS correspond to the sorting criteria "Distance", "Alphabet", "Price" and "Popularity", respectively. If the user performs a flick operation movement determined by the processing device 12 to correspond to directional movement TE, then the touch screen device 151 displays a list of POI search results sorted by distance, i.e. the supermarket (S-Shop) having the closest distance to the current vehicle position is displayed on top of the list. Such functionality can equally be applied when employing a touch pad device, wherein the input device 13 (i.e. touch pad device) and the display device 15 are separate.

The processing device thus determines the sorting criterion (e.g. alphabet or price or distance, etc.) according to the direction of flick operation by the user. The plurality of information is then sorted and displayed based on the selected sorting criterion. Each time the user performs a flick operation corresponding to one of the directional movements TE, TN, TW, TS, the processing device then changes the sorting criterion.

The navigation system may select/enter one of the displayed information, e.g. shown by highlighting the information (here: POI name A Shop), according to a touch operation by the user on the button or icon showing the information to be selected (here: A Shop).

According to another example, as shown in Fig. 5 in the right column, if the user at first performs a flick operation movement determined by the processing device 12 to correspond to directional movement TE, then the touch screen device 151 displays a list of POI search results sorted by distance, i.e. the supermarket (S-Shop) having the closest distance to the current vehicle position is displayed on top of the list. If the user then afterwards performs a flick operation movement determined by the processing device 12 to correspond to directional movement TW, then the touch screen device 151 displays a list of POI search results sorted by price, i.e. the supermarket (Y-Shop) having the best prices (e.g. for a particular product) is displayed on top of the list, as shown in the lowest depiction of Fig. 5.

Advantageously, the touch screen device 151 and processing device 12 are configured to detect a touch input movement by a user on a portion of the touch screen device 151 where the plurality of information (here: list of POI names) is displayed to the user on the touch screen device 151, for example as shown in the mid depiction of the right column in Fig. 5. Therefore, while the plurality of information (POI names) is displayed on the touch screen device 151, as shown in Fig. 5, the user can more quickly select the desired sorting criterion (e.g., switch from "Distance" to "Price") by a simple flick operation movement on the displayed search result image, whereas it is not necessary to switch between different display images, one of them displaying a list of sorting criteria, and the other one displaying the resulting information list sorted accordingly.

The above embodiments have been described with exemplary reference to POI information displayed in a search result list. It should be noted that, in principle, any kind of information derived from processed data, such as map data, can be employed in connection with the invention in any suitable way of display. Possible information derived from processed map data may be, e.g., a list of computed possible routes of a navigation system, a list of restaurants in a specified area, or a list of petrol stations in a specified area. For example, the plurality of information derived from the processed map data comprises multiple pieces of route information for guiding a user, e.g. various potential routes from a current vehicle position to a destination, which route information may be displayed instead of or in addition to a list of POIs (e.g. in a split screen image).

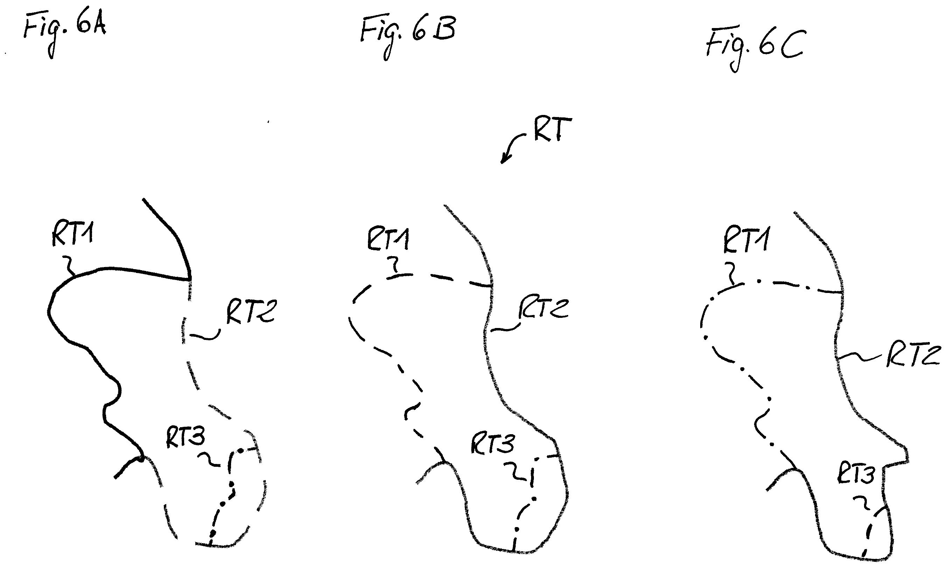

Fig. 6 shows an embodiment of the invention, in which different depictions of route information displayed on a display device are highlighted differently from another according to a respective different sorting criterion. For example, the navigation system 1 provides route information RT from a current vehicle position to a destination according to three possible routes RT1, RT2, RT3, which are differing in some route calculation criteria. For example, route RT1 is a calculated shortest route to the destination, route RT2 is a calculated fastest route to the destination, and route RT3 is the route to the destination at calculated lowest costs.

According to an embodiment, the processing device 12 provides the plurality of information (here: route information) in the form of a highlighted graphical display of the information. That is, the multiple pieces of information, such as the routes RT1, RT2, RT3, are highlighted differently from another in a highlighting sequence.

In Fig. 6A, it is assumed that the user selected the sorting criterion "Distance" according to a directional movement TE detected on an input device 13, such as a rotary knob or touch screen device as described above. The routes RT1, RT2, RT3 are then sorted by distance to the destination and shown in a highlighting sequence, which means that they are highlighted differently according to a particular highlighting sequence (e.g. way of display and emphasizing). For example, route RT1 is displayed in red (shown here in continuous line) having the shortest distance, route RT2 in blue (shown here in dashed line), and route RT3 in green (shown here in dotted line) having the longest distance.

In Fig. 6B, when the processing device 12 changes the sorting criterion, e.g., to the sorting criterion "Time", for example by detecting a directional movement TW, the highlighting sequence of the multiple routes RT1, RT2, RT3 displayed on the display device 15 is immediately changed. For example, route RT1 is now displayed in blue (shown here in dashed line), route RT2 in red (shown here in continuous line) having the shortest time, and route RT3 remains green (shown here in dotted line) having the longest time.

In Fig. 6C, when the processing device 12 changes the sorting criterion, e.g., to the sorting criterion "Cost", for example by detecting a directional movement TS, the highlighting sequence of the multiple routes RT1, RT2, RT3 is again changed immediately. For example, route RT1 is now green (shown here in dotted line) having the highest cost, route RT2 in red (shown here in continuous line) having the lowest cost, and route RT3 in blue (shown here in dashed line) having costs in between RT1 and RT2.

Instead of using different colors in highlighting/marking the different routes, a gradient of dark (best) to light (worst), e.g. of lines etc., of the respective sorting criterion may be employed. For example, the fastest route is displayed in dark, and the route with longest travel time in light with the sorting criterion "Time".

Therefore, while the route information RT is displayed on the display device, the user can more quickly select the desired sorting criterion (e.g., switch from "Distance" to "Time"), e.g., by a simple flick operation movement on the displayed route image or by a simple side push movement of a rotary knob, wherein it is not necessary to switch between different display images, one of them displaying a list of sorting criteria, and the other one displaying the resulting routes highlighted accordingly.

In this way, it is possible for the user to quickly switch between differently sorted information displayed on a display screen. For example, the user may quickly compare the different routes for distance, time and cost by performing only three simple movements one after the other, with the result image changing immediately after the respective movement. Thus, a very intuitive and efficient HMI may be created, which also significantly reduces driver distraction.

Generally, the user can quickly change quality, cost and time criteria (which are one of the most important ones applied in navigation system) for a search list generation or computation of data. As soon as a new criterion is selected by a simple directional movement, the list can be re-sorted/re-computed. Any highlighting described above with respect to a graphical display, such as of route information on a map, may analogously applied also with a display of information in a list. That is, the information provided in a list may be highlighted by different color in a highlighting sequence.

Further, according to an embodiment, e.g., a same name in a list may be highlighted with same font/box color in multiple lists sorted differently, so that the user can quickly follow any different positions of the name within the respective list depending on the sorting criterion when quickly switching between the different sorting criteria. Moreover, an indication of the chosen criterion by color may be implemented, e.g. orange for quality, green for time, blue for cost. That is, for example, the route information shown on the display device may be shown in a respective color, e.g. with a gradient of dark (best) to light (worst), so that the user can see from the color which type of sorting criterion is currently selected.

According to an embodiment, the directional movements TE, TN, TW, TS are each translational. In this way, sorting criteria may be mapped to, e.g., four intuitive positions or directions, like North, East, West and South. Directional movements used in the context of the present invention may also be rotational movements. For example, a particular sorting criterion desired by the user, such as "Cost", may be selected by rotating a rotary input device into a corresponding position out of multiple positions defined on the circumference (e.g. defined by three or four positions on the circumference).

Further, any combination of translational and rotational movements may be employed, e.g. for choosing a main criterion by a translational movement and a sub-criterion by a rotational movement.

According to the invention, in particular the following benefits are achieved:
The user can more quickly select the desired criteria and can quickly compare the solutions and make selection decision based on own experience. Further, the user can exploit the high computation power of the information processing apparatus by requesting adjustment of the options in a much quicker way. The user profits from solution list optimization using the same technique (i.e. applying simple directional movements indicative of different sorting criteria) in any context. The user does not need to pay attention to any distracting HMI options for solution sorting criteria.

## Claims

1. An information processing apparatus (1), comprising
- a processing device (12) configured to process data received from a data storage device (16) and to determine one of multiple sorting criteria, and further configured to provide a plurality of information (POI, RT) derived from the processed data to a display device (15) for displaying the plurality of information on the display device according to the one of the sorting criteria,
- an input device (13) configured to receive a user input and coupled to the processing device (12) for determining the one of the sorting criteria upon user input,
- wherein the input device (13), while the plurality of information (POI, RT) is displayed on the display device (15), is configured to detect a user input movement and to determine whether it corresponds with a first translational movement (TE), a second translational movement (TN) or a third translational movement (TW) which are different from each other, wherein the first translational movement (TE) is at a first angle to the second translational movement (TN), and the second translational movement (TN) is at a second angle to the third translational movement (TW), wherein the first and the second angle are right angles, and each of the first, second and third translational movements (TE, TN, TW) is indicative of a different sorting criterion,
- wherein the processing device (12), while the plurality of information (POI, RT) is displayed on the display device (15), is configured to change the one of the sorting criteria to another one of the sorting criteria, the another one of the sorting criteria determined depending on which of the first translational movement (TE), second translational movement (TN) and third translational movement (TW) is determined to correspond with the detected user input movement, and to change the displaying of the plurality of information (POI, RT) on the display device (15) according to the another one of the sorting criteria.

2. The information processing apparatus according to claim 1, wherein
- the processing device (12) is configured to provide the plurality of information (POI) in the form of a list of information derived from the processed data, and
- when the processing device (12) changes the one of the sorting criteria to the another one of the sorting criteria, the list of information (POI) displayed on the display device (15) is changed in its sorting sequence.

3. The information processing apparatus according to claim 1 or 2, wherein
- the processing device (12) is configured to provide the plurality of information in the form of a highlighted graphical display of information (RT) derived from the processed data, with multiple pieces of information (RT1, RT2, RT3) highlighted differently from another in a highlighting sequence, and
- when the processing device (12) changes the one of the sorting criteria to the another one of the sorting criteria, the highlighting sequence of the multiple pieces of information (RT1, RT2, RT3) displayed on the display device (15) is changed.

4. The information processing apparatus according to one of claims 1 to 3, wherein the processed data are processed map data and the plurality of information (POI, RT) is derived from the processed map data and comprises multiple points of interest (POI) and/or multiple pieces of route information (RT1, RT2, RT3) for guiding a user.

5. The information processing apparatus according to one of claims 1 to 4, wherein the input device (13) comprises a handle portion which is movable by a user corresponding to the first translational movement (TE), second translational movement (TN) and third translational movement (TW).

6. The information processing apparatus according to one of claims 1 to 5, wherein the input device (13) comprises a rotary portion (131) which is rotatable by a user in at least one rotary direction (RR, RL) to provide at least a first input functionality and which is movable by a user corresponding to the first translational movement (TE), second translational movement (TN) and third translational movement (TW), which are each transverse to the rotation axis of the rotary portion (131), to provide at least a second input functionality.

7. The information processing apparatus according to claim 6, wherein the input device (13) is configured to detect a rotation of the rotary portion (131) for selecting among the plurality of information (POI, RT) displayed on the display device (15).

8. The information processing apparatus according to claim 6 or 7, wherein the input device (13) is configured to detect a push movement of the rotary portion (131) for entering a selected information of the plurality of information (POI, RT) displayed on the display device (15) for processing by the processing device (12).

9. The information processing apparatus according to one of claims 1 to 8, wherein the input device comprises a touch screen device (151) or touch pad device which is configured to detect a touch input movement by a user corresponding to the first translational movement (TE), second translational movement (TN) or third translational movement (TW), particularly to detect a touch input movement which is a flick operation movement.

10. The information processing apparatus according to claim 9, wherein the touch screen device (151) is comprised at least in part in the display device (15) and is configured to display the plurality of information (POI, RT) and to detect the touch input movement by a user corresponding to the first translational movement (TE), second translational movement (TN) or third translational movement (TW) on a portion of the touch screen device (151) where the plurality of information (POI, RT) is displayed to the user.

11. The information processing apparatus according to one of claims 1 to 10, wherein the sorting criteria include at least several ones of a quality, cost, time, price, alphabet, distance and popularity criterion.

12. The information processing apparatus according to one of claims 1 to 11, wherein the information processing apparatus is a navigation system (1) and the processing device (12) is configured to process map data received from a map data storage device (16).

13. A method of processing information in an information processing apparatus (1), comprising the steps of:
- processing data received from a data storage device (16) and determining one of multiple sorting criteria,
- providing a plurality of information (POI, RT) derived from the processed data to a display device (15) for displaying the plurality of information on the display device according to the one of the sorting criteria,
- detecting through an input device (13) and while the plurality of information (POI, RT) is displayed on the display device (15) a user input movement and determining whether it corresponds with a first translational movement (TE), a second translational movement (TN) or a third translational movement (TW) which are different from each other, wherein the first translational movement (TE) is at a first angle to the second translational movement (TN), and the second translational movement (TN) is at a second angle to the third translational movement (TW), wherein the first and the second angle are right angles, and each of the first, second and third translational movements (TE, TN, TW) is indicative of a different sorting criterion,
- changing, while the plurality of information (POI, RT) is displayed on the display device, the one of the sorting criteria to another one of the sorting criteria, the another one of the sorting criteria determined depending on which of the first translational movement (TE), second translational movement (TN) and third translational movement (TW) is determined to correspond with the detected user input movement, and
- changing the displaying of the plurality of information (POI, RT) on the display device (15) according to the another one of the sorting criteria.

## Patentansprüche

1. Informationsverarbeitungsvorrichtung (1), aufweisend:
- eine Verarbeitungsvorrichtung (12), die dazu ausgebildet ist, von einer Datenspeichervorrichtung (16) empfangene Daten zu verarbeiten und eines von mehreren Sortierkriterien zu bestimmen, und ferner dazu ausgebildet ist, eine Mehrzahl von von den verarbeiteten Daten abgeleiteten Informationen (POI, RT) an einer Anzeigevorrichtung (15) zum Anzeigen der Mehrzahl von Informationen auf der Anzeigevorrichtung gemäß dem einen der Sortierkriterien bereitzustellen,
- eine Eingabevorrichtung (13), die zum Empfangen einer Benutzereingabe ausgebildet ist und mit der Verarbeitungsvorrichtung (12) gekoppelt ist, um das eine der Sortierkriterien nach der Benutzereingabe zu bestimmen,
- wobei die Eingabevorrichtung (13), während die Mehrzahl von Informationen (POI, RT) auf der Anzeigevorrichtung (15) angezeigt wird, zum Erfassen einer Benutzereingabebewegung sowie zur Bestimmung ausgebildet ist, ob diese einer ersten Translationsbewegung (TE), einer zweiten Translationsbewegung (TN) oder einer dritten Translationsbewegung (TW) entspricht, die voneinander verschieden sind, wobei die erste Translationsbewegung (TE) in einem ersten Winkel zu der zweiten Translationsbewegung (TN) stattfindet und die zweite Translationsbewegung (TN) in einem zweiten Winkel zu der dritten Translationsbewegung (TW) stattfindet, wobei der erste und der zweite Winkel rechte Winkel sind und wobei jeweils die erste, die zweite und die dritte Translationsbewegung (TE, TN, TW) ein anderes Sortierkriterium anzeigen,
- wobei die Verarbeitungseinrichtung (12), während die Mehrzahl von Informationen (POI, RT) auf der Anzeigeeinrichtung (15) angezeigt wird, dazu ausgebildet ist, das eine Sortierkriterium in ein anderes der Sortierkriterien zu ändern, wobei das andere der Sortierkriterien in Abhängigkeit davon bestimmt wird, welche von der ersten Translationsbewegung (TE), der zweiten Translationsbewegung (TN) und der dritten Translationsbewegung (TW) als der erfassten Benutzereingabebewegung entsprechend bestimmt wird, und dazu ausgebildet ist, die Anzeige der Mehrzahl von Informationen (POI, RT) auf der Anzeigevorrichtung (15) gemäß dem anderen der Sortierkriterien zu ändern.

2. Informationsverarbeitungsvorrichtung nach Anspruch 1,
- wobei die Verarbeitungsvorrichtung (12) dazu ausgebildet ist, die Mehrzahl von Informationen (POI) in Form einer Liste von Informationen bereitzustellen, die aus den verarbeiteten Daten abgeleitet sind, und
- wobei dann, wenn die Verarbeitungsvorrichtung (12) das eine der Sortierkriterien in das andere der Sortierkriterien ändert, die auf der Anzeigeeinrichtung (15) angezeigte Liste der Informationen (POI) in ihrer Sortierreihenfolge geändert wird.

3. Informationsverarbeitungsvorrichtung nach Anspruch 1 oder 2,
- wobei die Verarbeitungsvorrichtung (12) dazu ausgebildet ist, die Mehrzahl von Informationen in Form einer hervorgehobenen grafischen Anzeige von Informationen (RT) bereitzustellen, die aus den verarbeiteten Daten abgeleitet sind, wobei mehrere Teile von Informationen (RT1, RT2, RT3) in einer Hervorhebungsreihenfolge unterschiedlich hervorgehoben werden, und
- wobei dann, wenn die Verarbeitungsvorrichtung (12) das eine der Sortierkriterien in das andere der Sortierkriterien ändert, die Hervorhebungsreihenfolge der mehreren Teile von Informationen (RT1, RT2, RT3), die auf der Anzeigevorrichtung (15) angezeigt werden, geändert wird.

4. Informationsverarbeitungsvorrichtung nach einem der Ansprüche 1 bis 3, wobei die verarbeiteten Daten verarbeitete Kartendaten sind und die Mehrzahl von Informationen (POI, RT) aus den verarbeiteten Kartendaten abgeleitet wird und mehrere Punkte von Interesse (POI) und/oder mehrere Routeninformationen (RT1, RT2, RT3) zum Führen eines Benutzers beinhaltet.

5. Informationsverarbeitungsvorrichtung nach einem der Ansprüche 1 bis 4, wobei die Eingabevorrichtung (13) einen Handhabungsbereich aufweist, der von einem Benutzer entsprechend der ersten Translationsbewegung (TE), der zweiten Translationsbewegung (TN) und der dritten Translationsbewegung (TW) bewegbar ist.

6. Informationsverarbeitungsvorrichtung nach einem der Ansprüche 1 bis 5, wobei die Eingabevorrichtung (13) einen Drehbereich (131) aufweist, der von einem Benutzer in mindestens einer Drehrichtung (RR, RL) drehbar ist, um mindestens eine erste Eingabefunktionalität bereitzustellen, und die von einem Benutzer entsprechend der ersten Translationsbewegung (TE), der zweiten Translationsbewegung (TN) und der dritten Translationsbewegung (TW) bewegbar ist, die jeweils quer zu der Drehachse des Drehbereichs (131) sind, um mindestens eine zweite Eingabefunktionalität bereitzustellen.

7. Informationsverarbeitungsvorrichtung nach Anspruch 6,
wobei die Eingabevorrichtung (13) dazu ausgebildet ist, eine Drehung des Drehbereichs (131) zum Auswählen aus der Mehrzahl von auf der Anzeigevorrichtung (15) angezeigten Informationen (POI, RT) zu erfassen.

8. Informationsverarbeitungsvorrichtung nach Anspruch 6 oder 7,
wobei die Eingabevorrichtung (13) dazu ausgebildet ist, eine Drückbewegung des Drehbereichs (131) zum Eingeben einer ausgewählten Information aus der Mehrzahl von auf der Anzeigeeinrichtung (15) angezeigten Informationen (POI, RT) zur Verarbeitung durch die Verarbeitungsvorrichtung (12) zu erfassen.

9. Informationsverarbeitungsvorrichtung nach einem der Ansprüche 1 bis 8,
wobei die Eingabevorrichtung eine Berührungsbildschirmvorrichtung (151) oder eine Berührungsfeldvorrichtung aufweist, die zum Erfassen einer Berührungseingabebewegung durch einen Benutzer entsprechend der ersten Translationsbewegung (TE), der zweiten Translationsbewegung (TN) oder der dritten Translationsbewegung (TW) ausgebildet ist, insbesondere zum Erfassen einer Berührungseingabebewegung, bei der es sich um eine Streich-Betätigungsbewegung handelt.

10. Informationsverarbeitungsvorrichtung nach Anspruch 9,
wobei die Berührungsbildschirmvorrichtung (151) zumindest teilweise in der Anzeigevorrichtung (15) enthalten ist und dazu ausgebildet ist, die Mehrzahl von Informationen (POI, RT) anzuzeigen und die Berührungseingabebewegung durch einen Benutzer entsprechend der ersten Translationsbewegung (TE), der zweiten Translationsbewegung (TN) oder der dritten Translationsbewegung (TW) auf einem Bereich der Berührungsbildschirmvorrichtung (151) zu erfassen, auf der dem Benutzer die Mehrzahl von Informationen (POI, RT) angezeigt wird.

11. Informationsverarbeitungsvorrichtung nach einem der Ansprüche 1 bis 10,
wobei die Sortierkriterien mindestens mehrere Kriterien aus Qualität, Kosten, Zeit, Preis, Alphabet, Entfernung und Beliebtheit beinhalten.

12. Informationsverarbeitungsvorrichtung nach einem der Ansprüche 1 bis 11, wobei die Informationsverarbeitungsvorrichtung ein Navigationssystem (1) ist und die Verarbeitungsvorrichtung (12) dazu ausgebildet ist, von einer Kartendaten-Speichervorrichtung (16) empfangene Kartendaten zu verarbeiten.

13. Verfahren zum Verarbeiten von Informationen in einer Informationsverarbeitungsvorrichtung (1), das folgende Schritte aufweist:
- Verarbeiten von Daten, die von einer Datenspeichervorrichtung (16) empfangen werden, und Bestimmen eines von mehreren Sortierkriterien,
- Bereitstellen einer Mehrzahl von Informationen (POI, RT), die aus den verarbeiteten Daten abgeleitet werden, an einer Anzeigeeinrichtung (15) zum Anzeigen der Mehrzahl von Informationen auf der Anzeigeeinrichtung gemäß dem einen der Sortierkriterien,
- über eine Eingabeeinrichtung (13) und während der Anzeige der Mehrzahl von Informationen (POI, RT) auf der Anzeigeeinrichtung (15) erfolgendes Erfassen einer Benutzereingabebewegung sowie Feststellen, ob diese einer ersten Translationsbewegung (TE), einer zweiten Translationsbewegung (TN) oder einer dritten Translationsbewegung (TW) entspricht, die voneinander verschieden sind, wobei die erste Translationsbewegung (TE) in einem ersten Winkel zu der zweiten Translationsbewegung (TN) stattfindet und die zweite Translationsbewegung (TN) in einem zweiten Winkel zu der dritten Translationsbewegung (TW) stattfindet, wobei der erste und der zweite Winkel rechte Winkel sind und wobei jeweils die erste, die zweite und die dritte Translationsbewegung (TE, TN, TW) ein anderes Sortierkriterium anzeigen,
- während der Anzeige der Mehrzahl von Informationen (POI, RT) auf der Anzeigevorrichtung erfolgendes Ändern des einen der Sortierkriterien in ein anderes der Sortierkriterien, wobei das andere der Sortierkriterien in Abhängigkeit davon bestimmt wird, welche der ersten Translationsbewegung (TE), der zweiten Translationsbewegung (TN) und der dritten Translationsbewegung (TW) als der erfassten Benutzereingabebewegung entsprechend festgestellt wird, und
- Ändern der Anzeige der Mehrzahl von Informationen (POI, RT) auf der Anzeigevorrichtung (15) gemäß dem anderen der Sortierkriterien.

## Revendications

1. Appareil de traitement d'informations (1) comprenant :
- un dispositif de traitement (12) configuré pour traiter des données reçues à partir d'un dispositif de stockage de données (16) et pour déterminer un critère de sélection choisi parmi plusieurs critères de sélection, et configuré en outre pour fournir un certain nombre d'informations (POI, RT) qui dérivent des données traitées, à un dispositif d'affichage (15) à des fins d'affichage desdites plusieurs informations sur le dispositif d'affichage en fonction dudit critère de sélection ;
- un dispositif d'entrée (13) configuré pour recevoir une entrée d'utilisateur et couplé au dispositif de traitement (12) pour la détermination dudit un critère de sélection à la suite d'une entrée d'utilisateur ;
- dans lequel le dispositif d'entrée (13), au moment où lesdites plusieurs informations (POI, RT) sont affichées sur le dispositif d'affichage (15), est configuré pour détecter un mouvement d'entrée d'utilisateur et pour déterminer le fait de savoir si ce mouvement correspond à un premier mouvement de translation (TE), à un deuxième mouvement de translation (TN) ou à un troisième mouvement de translation (TW) qui sont différents les uns des autres ; dans lequel le premier mouvement de translation (TE) forme un premier angle par rapport au deuxième mouvement de translation (TN) et le deuxième mouvement de translation (TN) forme un deuxième angle par rapport au troisième mouvement de translation (TW) ; dans lequel le premier et le deuxième angle sont des angles droits et chaque mouvement choisi parmi le premier, le deuxième et le troisième mouvement de translation (TE, TN, TW) fournit une indication concernant un critère de sélection différent ;
- dans lequel le dispositif de traitement (12), au moment où lesdites plusieurs informations (POI, RT) sont affichées sur le dispositif d'affichage (15), est configuré pour modifier le critère de sélection en question et passer à un autre critère de sélection, l'autre critère de sélection étant déterminé en fonction du fait de savoir quel mouvement de translation choisi parmi le premier mouvement de translation (TE), le deuxième mouvement de translation (TN) et le troisième mouvement de translation (TW) a été déterminé pour correspondre au mouvement détecté de l'entrée d'utilisateur, et pour modifier l'affichage desdites plusieurs informations (POI, RT) sur le dispositif d'affichage (15) en fonction de l'autre critère de sélection en question.

2. Appareil de traitement d'informations selon la revendication 1, dans lequel :
- le dispositif de traitement (12) est configuré pour procurer lesdites plusieurs informations (POI) sous la forme d'une liste d'informations dérivées des données traitées ; et
- lorsque le dispositif de traitement (12) modifie le critère de sélection en l'autre critère de sélection en question, la liste des informations (POI) affichées sur le dispositif d'affichage (15) est modifiée en ce qui concerne sa séquence de sélection.

3. Appareil de traitement d'informations selon la revendication 1 ou 2, dans lequel :
- le dispositif de traitement (12) est configuré pour procurer lesdites plusieurs informations sous la forme d'un affichage graphique mis en surbrillance des informations (RT) dérivées des données traitées, plusieurs informations individuelles (RT1, RT2, RT3) étant mises en surbrillance différemment par rapport à d'autres dans une séquence mise en surbrillance ; et
lorsque le dispositif de traitement (12) modifie ledit critère de sélection pour passer à l'autre critère de sélection en question, la séquence mise en surbrillance desdites plusieurs informations individuelles (RT1, RT2, RT3) affichées sur le dispositif d'affichage (15) est modifiée.

4. Appareil de traitement d'informations selon l'une quelconque des revendications 1 à 3, dans lequel les données traitées représentent des données cartographiques traitées et lesdites plusieurs informations (POI, RT) dérivent des données cartographiques traitées et comprennent un certain nombre de points d'intérêt (POI) et/ou un certain nombre d'informations routières spécifiques (RT1, RT2, RT3) pour le guidage d'un utilisateur.

5. Appareil de traitement d'informations selon l'une quelconque des revendications 1 à 4, dans lequel le dispositif d'entrée (13) comprend une portion faisant office de poignée qui peut faire l'objet d'un déplacement par le biais d'un utilisateur de manière correspondante au premier mouvement de translation (TE), au deuxième mouvement de translation (TN) et au troisième mouvement de translation (TW).

6. Appareil de traitement d'informations selon l'une quelconque des revendications 1 à 5, dans lequel le dispositif d'entrée (13) comprend une portion rotative (131) qui est capable d'effectuer des rotations par le biais d'un utilisateur dans au moins une direction de rotation (RR, RL) pour procurer au moins une première fonctionnalité d'entrée et qui peut faire l'objet d'un déplacement par le biais d'un utilisateur de manière correspondante au premier mouvement de translation (TE), au deuxième mouvement de translation (TN) et au troisième mouvement de translation (TW), qui sont disposés chacun en position transversale par rapport à l'axe de rotation de la portion rotative (131), afin de procurer au moins une seconde fonctionnalité d'entrée.

7. Appareil de traitement d'informations selon la revendication 6, dans lequel le dispositif d'entrée (13) est configuré pour détecter une rotation de la portion rotative (131) dans le but d'opérer une sélection parmi lesdites plusieurs informations (POI, RT) affichées sur le dispositif d'affichage (15).

8. Appareil de traitement d'informations selon la revendication 6 ou 7, dans lequel le dispositif d'entrée (13) est configuré pour détecter un mouvement de poussée de la portion rotative(131) dans le but d'entrer une information sélectionnée parmi lesdites plusieurs informations (POI, RT) affichées sur le dispositif d'affichage (15) à des fins de traitement par l'intermédiaire du dispositif de traitement (12).

9. Appareil de traitement d'informations selon l'une quelconque des revendications 1 à 8, dans lequel le dispositif d'entrée comprend un écran tactile (151) ou un pavé tactile qui est configuré pour détecter un mouvement d'entrée par poussée par le biais d'un utilisateur de manière correspondante au premier mouvement de translation (TE), au deuxième mouvement de translation (TN) et au troisième mouvement de translation (TW), en particulier pour détecter un mouvement d'entrée par poussée qui représente un mouvement d'exploitation par tapotement.

10. Appareil de traitement d'informations selon la revendication 9, dans lequel l'écran tactile (151) est compris au moins en partie dans le dispositif d'affichage (15) et est configuré pour afficher lesdites plusieurs informations (POI, RT) et pour détecter le mouvement d'entrée de type tactile par le biais d'un utilisateur de manière correspondante au premier mouvement de translation (TE), au deuxième mouvement de translation (TN) et au troisième mouvement de translation (TW) sur une portion de l'écran tactile (151) dans laquelle lesdites plusieurs informations (POI, RT) sont affichées aux yeux de l'utilisateur.

11. Appareil de traitement d'informations selon l'une quelconque des revendications 1 à 10, dans lequel les critères de sélection englobent au moins plusieurs critères choisis parmi un critère de qualité, un critère de coût, un critère de temps, un critère de prix, un critère d'alphabet, un critère de distance et un critère de popularité.

12. Appareil de traitement d'informations selon l'une quelconque des revendications 1 à 11, dans lequel l'appareil de traitement d'informations représente un système de navigation (1) et le dispositif de traitement (12) est configuré pour traiter des données cartographiques reçues de la part d'un dispositif de stockage de données cartographiques (16).

13. Procédé de traitement d'informations dans un appareil de traitement d'informations (1), comprenant les étapes dans lesquelles :
- on traite des données reçues à partir d'un dispositif de stockage de données (16) et on détermine un critère de sélection choisi parmi plusieurs critères de sélection ;
- on procure plusieurs informations (POI, RT) dérivées des données traitées à un dispositif d'affichage (15) pour afficher lesdites plusieurs informations sur le dispositif d'affichage en fonction dudit critère de sélection ;
- on détecte, par le biais d'un dispositif d'entrée (13) et tandis que lesdites plusieurs informations (POI, RT) sont affichées sur le dispositif d'affichage (15), un mouvement d'entrée d'utilisateur et on détermine le fait de savoir si ce mouvement correspond à premier mouvement de translation (TE), à un deuxième mouvement de translation (TN) et à un troisième mouvement de translation (TW) qui sont différents les uns des autres ; dans lequel le premier mouvement de translation (TE) forme un premier angle par rapport au deuxième mouvement de translation (TN) et le deuxième mouvement de translation (TN) forme un deuxième angle par rapport au troisième mouvement de translation (TW) ; dans lequel le premier et le deuxième angle sont des angles droits et chaque mouvement choisi parmi le premier, le deuxième et le troisième mouvement de translation (TE, TN, TW) fournit une indication concernant un critère de sélection différent ;
- on modifie, tandis que lesdites plusieurs informations (POI, RT) sont affichées sur le dispositif d'affichage, le critère de sélection en en l'autre critère de sélection, l'autre critère de sélection étant déterminé en fonction du fait de savoir quel mouvement de translation choisi parmi le premier mouvement de translation(TE), le deuxième mouvement de translation (TN) et le troisième mouvement de translation (TW) a été déterminé pour correspondre au mouvement détecté de l'entrée d'utilisateur ; et ;
- on modifie l'affichage desdites plusieurs informations (POI, RT) sur le dispositif d'affichage (15) en fonction de l'autre critère de sélection.
